# EUROPÄISCHE PATENTSCHRIFT

(11) **EP 1 619 435 B1**
(45) Veröffentlichungstag und Bekanntmachung des Hinweises auf die Patenterteilung: **11.03.2009**
(21) Anmeldenummer: 05000576.8
(22) Anmeldetag: 13.01.2005
(51) Int. Cl.: F16L 21/03

(54) **Dichtring für Steckmuffenverbindungen**
Sealing ring for a socket connection
Joint d'étanchéité pour un raccord à manchon

(30) Priorität: 20.07.2004 DE 102004038333
(43) Veröffentlichungstag der Anmeldung: 25.01.2006
(73) Patentinhaber: Bode GmbH, 24558 Henstedt-Ulzburg (DE)
(72) Erfinder: Nowack, Eckard, 25364 Brande-Hörnerkirchen (DE); Bode, Michael, Dipl.-Ing., 22609 Hamburg (DE)
(74) Vertreter: Hansmann, Dierk

(56) Entgegenhaltungen:
- DE-U1-4202004 000 96
- DE-U1-1202004 002 03
- US-B1- 6 277 315

## Beschreibung

Die Erfindung bezieht sich auf eine Steckmuffenverbindung mit einer Dichtung zwischen rohrförmigen Körpern als Hausabfluß- und Kanalrohre, wobei ein angeordneter elastischer Dichtring aus Kunststoff in einer nach innen offenen umlaufenden Nut als Standardsicke eines Rohres angeordnet ist und eine äußere Umfangsfläche eines in den Dichtring einzusetzendes Rohr aufnimmt und der Dichtring in Einsteckrichtung schräg angestellte, durch das eingesteckte Rohr in Einsteckrichtung verschwenkbare Dichtlippen und mindestens eine Kompressionslippe aufweist, wobei der Dichtring aus einem Dichtelement in Form von hochwertigem elastomeren Kunststoff, wie TPE, TPU oder einem Elastomer, als Teilelement besteht, das einen durch den Dichtwerkstoff mindestens teilweise umschlossenes Endstück aus einem härteren Kunststoff, wie PP, aufweist sowie das Endstück des eingesetzten Dichtringes mit seinem freien Endbereich ohne Dichtwerkstoff am Dichtungsanfang in Einsteckrichtung des Rohres der Sicke zugeordnet ist.

Ausbildungen dieser Art sind in vielfältiger Ausgestaltung bekannt geworden. Es hat sich aber gezeigt, daß es relativ aufwendig ist, mit einem Dichtring einen hohen Ausfüllungsgrad einer Standardsicke bei großer Dichtwirkung herzustellen. Hierbei besteht oftmals der Mangel, daß die verwendeten Materialien für derartige Dichtringe hohe Kosten verursachen und die Wurzelfestigkeit in der Sicke nicht gegeben ist.

Es ist auch bekannt, Versteifungsringe in die Dichtung zu integrieren. Hierbei treten Montageaufwendungen bei der Erstellung der Dichtung auf und es müssen entsprechende Bemessungen berücksichtigt werden, die eine genaue Positionierung in der Sicke ermöglichen.

Eine gattungsgemäße Anordnung ist aus der US-B1-6,277,315 bekannt. Hierbei bildet ein Endstück eines Dichtringes einen winkelförmigen Querschnitt und ein Schenkel den außenliegenden Endbereich am Dichtungsanfang, wobei ein weiterer in die Sicke hineinreichender Schenkel durch einen Dichtwerkstoff umschlossen ist.

Nach der DE 20 2004 002 031 U1 ist eine sogenannte Klappdichtung für Steckmuffenverbindungen mit unterschiedlichen Materialien bekannt geworden, wobei im umschlossenen Innenbereich ein Versteifungsteil gebildet wird. Es hat sich gezeigt, daß diese Anordnung nicht ohne weiteres in eine vorgegebene Nut einsetzbar ist und durch die beweglichen Teilstücke des Versteifungsteils aufwendig herstellbar und kein durchgehender Teil des hochwertigen Dichtungsmaterials zwischen den Wandungen gebildet wird.

Ferner ist aus der DE 20 2004 000 964 U1 ein Dichtring bekannt geworden, der in seiner Ausbildung lediglich für eine sogenannte offene Sicke einsetzbar und somit für eine vorgegebene Nut als geschlossene Sicke nicht verwendbar ist. Somit ist ein Einsetzen in eine geschlossene Sicke nicht möglich.

Die Aufgabe der Erfindung ist es, eine ökonomische Ausbildung einer Steckmuffenverbindung mit einem Dichtring zur Minimierung von hochwertigem Dichtwerkstoff zu schaffen, der eine einfache Herstellung mit einem hohen Füllungsgrad der Sicke aufweist und in eine umlaufende Nut als Sicke einbringbar ist, die eine Kompressionsdichtung durch die Materialstärke des Dichtungswerkstoffs ermöglicht.

Die Lösung dieser Aufgabe erfolgt erfindungsgemäß durch die Merkmalskombination des Anspruches 1. Hierdurch ist es möglich, den Anteil des hochpreisigen Dichtwerkstoffs für einen funktionsfähigen Dichtring bei einer Steckmuffenverbindung zu minimieren sowie zwischen einem Innenrohr und Außenrohr über den Dichtring eine Kompressionsdichtung durch die Materialdicke des Dichtungsmaterials auszubilden.

Zusätzlich wird als Ausgestaltung vorgeschlagen, daß die unterschiedlichen Werkstoffe von Dichtbereich und Kern als Zweikomponenten-Verbindung miteinander verbunden sind.

Zur Erleichterung der Montage ist vorgesehen, daß in den Dichtwerkstoff ein Gleitmittel eingelagert ist, das an der Oberfläche einen Gleitfilm ausbildet.

Ferner wird vorgeschlagen, daß das Endstück einen Rezeß zur Aufnahme für einen Herstellungsprozeß darstellt. Es zeigen:
- Fig. 1: einen Schnitt durch einen Dichtring, und
- Fig. 2: einen eingesetzten Dichtring in eine Sicke.

Der dargestellte Dichtring 1 wird durch Teilelemente aus Kunststoff gebildet, wobei ein Endstück 2 am Dichtungsanfang zur Bildung eines Dichtelementes mit einem teilweise umschließenden Dichtwerkstoff 3 versehen ist und die Elemente zusammen im Spritzgießverfahren in bekannter Weise herstellbar sind.

Der Dichtwerkstoff 3 des Dichtelementes wird dabei aus einem hochwertigen elastomeren Kunststoff, wie beispielsweise TPE, TPU oder einem Elastomer wie SBR, gebildet, während das Endstück 2 aus einem härteren preiswerten Kunststoff, wie beispielsweise PP, gebildet ist. Der Anteil des Endstückes 2 am Dichtring 1 soll dabei so groß wie möglich gewählt werden.

Das Endstück 2 am Dichtungsanfang ist an der in Einsteckrichtung entsprechend der dargestellten Linie 6 eines einzusetzenden Rohres liegenden Seite angeordnet und tritt aus dem Dichtwerkstoff 3 des Dichtelementes hervor.

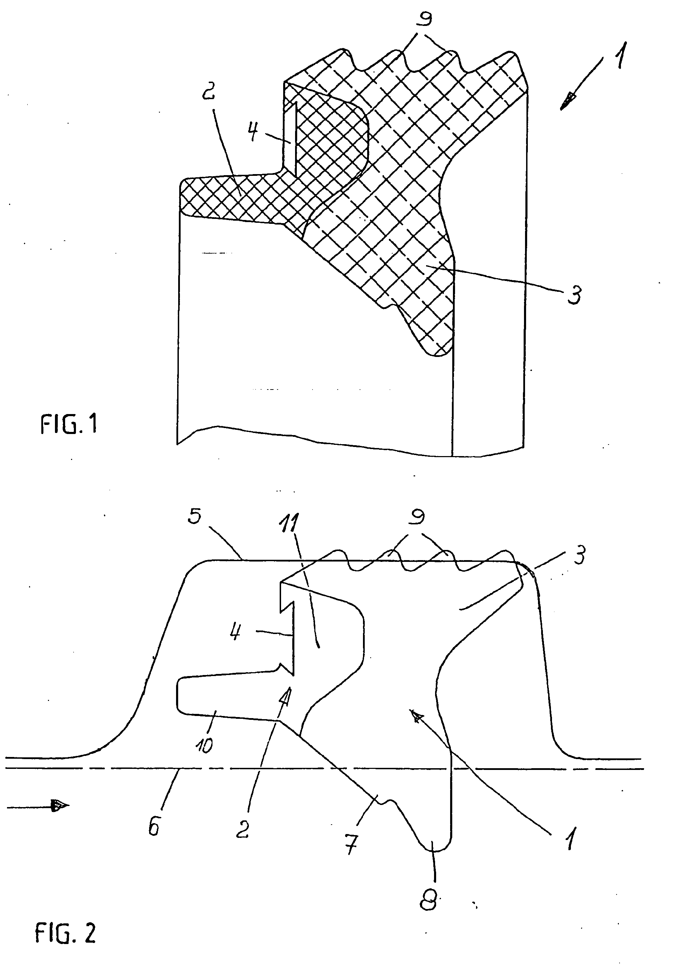

Aus der Einbaudarstellung gemäß Fig. 2 ist zu entnehmen, daß eine Sicke 5 eines Rohres den Dichtring 1 aufnimmt. Der Dichtring 1 besteht aus dem Endstück 2 am Dichtungsanfang und dem Dichtwerkstoff 3 als eigentlichem Dichtelement, das nach innen weisende Dichtlippen 7 und 8 trägt, die in einem Winkel in Einsteckrichtung eines einzusetzenden Rohres angestellt sind. Die in Einsteckrichtung vorne liegende Dichtlippe 7 als Kompressionslippe und eine nachfolgende Dichtlippe 8.

Auf seinem Dichtungsaußendurchmesser ist der Dichtring 1 mit einer Außenprofilierung 9 versehen, um die Abdichtung zu verbessern.

Das Endstück 2 ist in diesem Fall als Winkelstück ausgebildet, wobei ein Schenkel 10 einen außenliegenden Endbereich bildet, während der andere Schenkel 11 durch den Dichtwerkstoff 3 umschlossen ist. Hierbei besitzt der Schenkel 11 an der dem Dichtstoff 3 abgewandten Seite einen Rezeß 4 zur Aufnahme des Endstückes 2 für den Herstellungsprozeß.

## Patentansprüche

1. Steckmuffenverbindung mit einer Dichtung zwischen rohrförmigen Körpern als Hausabfluß- und Kanalrohre, wobei ein angeordneter elastischer Dichtring (1) aus Kunststoff in einer nach innen offenen umlaufenden Nut (5) als Standardsicke eines Rohres angeordnet ist und eine äußere Umfangsfläche eines in den Dichtring (1) einzusetzendes Rohr aufnimmt und der Dichtring (1) in Einsteckrichtung schräg angestellte, durch das eingesteckte Rohr in Einsteckrichtung verschwenkbare Dichtlippen (8) und mindestens eine Kompressionslippe (7) aufweist, wobei der Dichtring (1) aus einem Dichtelement in Form von hochwertigem elastomeren Kunststoff, wie TPE, TPU oder einem Elastomer als Teilelement besteht, das einen durch den Dichtwerkstoff (3) mindestens teilweise umschlossenes Endstück (2) aus einem härteren Kunststoff, wie PP, aufweist sowie das Endstück (2) des eingesetzten Dichtringes (1) mit seinem freien Endbereich ohne Dichtwerkstoff (3) am Dichtungsanfang in Einsteckrichtung des Rohres der Sicke (5) zugeordnet ist, **dadurch gekennzeichnet, daß** das Endstück (2) einen L-förmigen Querschnitt aufweist, indem ein Schenkel (10) den außenliegenden Endbereich am Dichtungsanfang bildet und ein weiterer in die Sicke (5) in radialer Richtung hineinragender Schenkel (11) durch den Dichtwerkstoff (3) umschlossen ist.

2. Steckmuffenverbindung nach Anspruch 1, **dadurch gekennzeichnet, daß** die unterschiedlichen Werkstoffe von Dichtbereich (3) und dem Endstück (2) als Zweikomponenten-Verbindung miteinander verbunden sind.

3. Steckmuffenverbindung nach Anspruch 1 oder 2, **dadurch gekennzeichnet, daß** in den Dichtwerkstoff (3) ein Gleitmittel eingelagert ist, das an der Oberfläche einen Gleitfilm ausbildet.

4. Steckmuffenverbindung nach einem der Ansprüche 1 bis 3, **dadurch gekennzeichnet, daß** das Endstück (2) einen Rezeß (4) zur Aufnahme für einen Herstellungsprozeß aufweist.

## Claims

1. Push-in socket joint with a seal between tubular bodies in the form of domestic drain pipes and sewer pipes, wherein an elastic sealing ring (1) which is provided and is made of plastic is disposed in an inwardly open, circumferential groove (5) in the form of a standard bead in a pipe and receives an external peripheral face of a pipe which is to be inserted in the sealing ring (1), and the sealing ring (1) has sealing lips (8) which are set obliquely in the direction of pushing-in and can be tilted in the direction of pushing-in by the pipe which is pushed in, and said sealing ring has at least one compression lip (7), wherein the sealing ring (1) consists of a sealing element, in the form of high-grade elastomeric plastic such as TPE, TPU or an elastomer, in the form of a partial element which has an end piece (2) made of a harder plastic, such as PP, which is at least partially enclosed by the sealing material (3), and the end piece (2) of the inserted sealing ring (1) is associated with the bead (5) by means of its free end region without sealing material (3) at the beginning of the seal in the direction of pushing-in of the pipe, **characterised in that** the end piece (2) has an L-shaped cross-section through the fact that one leg (10) forms the externally located end region at the beginning of the seal and another leg (11), which projects into the bead (5) in the radial direction, is enclosed by the sealing material (3).

2. Push-in socket joint according to claim 1, **characterised in that** the different materials of the sealing region (3) and the end piece (2) are connected to one another in the form of a two-component joint.

3. Push-in socket joint according to claim 1 or 2, **characterised in that** a lubricant, which forms a lubricating film on the surface, is incorporated in the sealing material (3).

4. Push-in socket joint according to one of claims 1 to 3, **characterised in that** the end piece (2) has a recess (4) for the purpose of receiving it for a manufacturing process.

## Revendications

1. Raccord à manchon avec un joint d'étanchéité entre des corps tubulaires servant de tuyaux de décharge d'eaux domestiques et de conduites, une bague d'étanchéité (1) élastique, en matière synthétique étant installée dans une rainure (5) continue, ouverte vers l'intérieur, en tant que nervure standard d'un tube, et qui accueille une surface périphérique extérieure d'un tube devant être mis en place dans la bague d'étanchéité (1), et la bague d'étanchéité (1) présentant des lèvres d'étanchéité (8) orientées obliquement dans la direction d'insertion, qui peuvent être pivotées dans la direction d'insertion par le tube inséré, et au moins une lèvre de compression (7), la bague d'étanchéité (1) consistant, en tant qu'élément partiel, en un élément d'étanchéité, formé en matière synthétique élastomère de qualité supérieure, comme TPE, TPU ou autre élastomère, qui présente une pièce d'extrémité (2) en matière synthétique plus dure, comme du PP, qui est entourée, au moins partiellement, par le matériau d'étanchéité (3), de même que la pièce d'extrémité (2) de la bague d'étanchéité (1) mise en place est associée à la nervure (5), avec sa zone d'extrémité libre, sans matériau d'étanchéité (3), au début de l'étanchéité, dans la direction d'insertion du tube, **caractérisé en ce que** la pièce d'extrémité (2) présente une section transversale en forme de L, une branche (10) formant la zone d'extrémité située à l'extérieur, au début de l'étanchéité, et une autre branche (11), en saillie dans la nervure (5), dans la direction radiale, étant entourée par le matériau d'étanchéité (3).

2. Raccord à manchon selon la revendication 1, **caractérisé en ce que** les différents matériaux de la zone d'étanchéité (3) et de la pièce d'extrémité (2) sont liés ensemble sous la forme d'une liaison à deux composants.

3. Raccord à manchon selon revendication 1 ou 2, **caractérisé en ce que** le matériau d'étanchéité (3) contient un lubrifiant, qui forme un film de glissement sur la surface.

4. Raccord à manchon selon l'une des revendications 1 à 3, **caractérisé en ce que** la pièce d'extrémité (2) présente un retrait (4) qui sert de logement lors d'un processus de fabrication.
